Europäisches Patentamt

European Patent Office

Office européen des brevets

(11) Veröffentlichungsnummer: **0 077 491**

**A1**

(12) **EUROPÄISCHE PATENTANMELDUNG**

(21) Anmeldenummer: **82109215.2**

(22) Anmeldetag: **05.10.82**

(51) Int. Cl.³: **G 01 C 19/38**

(30) Priorität: **19.10.81 DE 3141405**

(43) Veröffentlichungstag der Anmeldung:
**27.04.83 Patentblatt 83/17**

(84) Benannte Vertragsstaaten:
**AT BE CH DE FR GB IT LI LU NL SE**

(71) Anmelder: **LITEF Litton Techn. Werke der HELLIGE GmbH**
**Lörracher Strasse 18**
**D-7800 Freiburg/Br.(DE)**

(72) Erfinder: **Sinclair, Brian**
**Schwarzwaldstrasse 14**
**D-7801 Ehrenkirchen(DE)**

(72) Erfinder: **Scott, James**
**2, Roseburn Cliff**
**Edinburgh EH12 GAL(GB)**

(72) Erfinder: **Fischer, J., Dr.**
**23456 Candlewood Way**
**Cenoga Park California 91307(US)**

(74) Vertreter: **Patentanwälte TER MEER - MÜLLER - STEINMEISTER**
**Triftstrasse 4**
**D-8000 München 22(DE)**

(54) Verfahren zur raschen und direkten Azimut-Winkelbestimmung mit Hilfe eines Kreiselkompasses.

(57) Das Verfahren zur raschen und direkten Azimut-Winkelbestimmung mit Hilfe eines Kreiselkompasses sieht im wesentlichen drei Meßschritte vor, wobei bei einer ersten Messung der Azimutwinkel $\psi$ zwischen der im wesentlichen horizontalen Kreiselmeßachse (x) und Nord in einer Ausgangsposition bestimmt wird, bei einem zweiten Meßschritt in einer um 180° um die vertikale Kreiseldrehachse gedrehten Position der Azimut-Winkel ($\psi$ + 180°) zwischen der Kreiselmeßachse (x) und Nort ermittelt und schließlich bei einer dritten Messung der Azimutwinkel wiederum in der Ausgangsposition bestimmt wird. Anschliessend erfolgt unter der Annahme eines exponentiellen Verlaufs der Meßsignale infolge von Fehlereinflüssen die Bestimmung eines gewichteten Mittels zwischen den Meßwerten des ersten und dritten Meßschritts derart, daß der Mittelwert bezüglich der im Meßsignal enthaltenen Fehlerbeiträge weitgehend dem Wert im Zeitpunkt der zweiten Messung entspricht. Die drei Meßschritte lassen sich vergleichsweise sehr rasch durchführen; die Drehung um die vertikale Kreiseldrehachse erfolgt rechnergesteuert und voll automatisch.

Das Verfahren eignet sich insbesondere bei Verwendung eines dynamisch abgestimmten zweiachsigen Strapdown-Kreisels zur Positionierung und Ausrichtung von Peilgeräten wie Theodoliten, Radarantennen, Laser-Entfernungs-meßgeräten und dergleichen.

./...

FIG.1

0077491

# TER MEER-MÜLLER-STEINMEISTER

## PATENTANWÄLTE — EUROPEAN PATENT ATTORNEYS

Dipl.-Chem. Dr. N. ter Meer
Dipl.-Ing. F. E. Müller
Triftstrasse 4,
D-8000 MÜNCHEN 22

Dipl.-Ing. H. Steinmeister
Artur-Ladebeck-Strasse 51
D-4800 BIELEFELD 1

Mü/vL

5. Oktober·1982

LITEF

Litton Techn. Werke der HELLIGE GmbH

Lörracher Str. 18, D-7800 Freiburg/Br.

---

Verfahren zur raschen und direkten Azimut-
Winkelbestimmung mit Hilfe eines Kreiselkompasses

---

Priorität: 19. Oktober 1981, Bundesrepublik Deutschland,
Aktenzeichen P 31 41 405.2

BESCHREIBUNG

Die Erfindung betrifft ein Verfahren zur raschen und
direkten Azimut-Winkelbestimmung mit Hilfe eines Kreiselkompasses sowie die Anwendung des Verfahrens zur Ausrichtung
von Peilgeräten.

- 2 -

Kurz nach dem Einschalten eines Kreiselkompasses sind das Kreiseldriftverhalten und andere Kreiselfehler nicht stabil; sie ändern sich zeitlich in erster Linie aufgrund einer Temperaturabhängigkeit in Verbindung mit der noch nicht auf einem stabilen Wert eingependelten Kreiseltemperatur. Bei bekannten Kreiselsystemen wird für den Prozeß der Nordsuche relativ viel Zeit benötigt oder es muß bei sogenannten schnellausrichtenden Nordfindern erst eine Ausrichtung zwischen einer Meßrichtung des Nordfinders und einer Peillinie vorgenommen werden.

Der Erfindung liegt die Aufgabe zugrunde, eine Azimut-Winkelbestimmung mit einem Kreiselkompaß unmittelbar nach Einschaltung des Kreiselsystems sehr rasch vornehmen zu können.

Das erfindungsgemäße Verfahren ist im Patentanspruch 1 angegeben.

Vorteilhafte Weiterbildungen des Erfindungsgedankens und Anwendungen der Erfindung sind in abhängigen Patentansprüchen gekennzeichnet.

Das erfindungsgemäße Meßprinzip beruht auf einer 3-Positions-Messung und einer nachfolgenden vergleichsweise einfachen Auswertung. Für die 3-Positions-Messung wird insbesondere bei Verwendung eines dynamisch abgestimmten, zweiachsigen Strapdown-Kreisels von einer Ausgangsposition ausgegangen und es wird beispielsweise während einer Meßdauer von 30 Sekunden der Azimut-Winkel zwischen einer der beiden Kreiselmeßachsen und Nord bestimmt. Sodann wird, vorzugsweise automatisch und rechnergesteuert, der Kreisel um die senkrecht stehende Kreisel-Spinnaches um 180° gedreht

- 3 -

und es erfolgt wiederum während etwa 30 Sekunden eine zweite Messung. Schließlich wird zur Ausgangsposition zurückgekehrt und die dritte Messung wird entsprechend der ersten Messung in Ausgangsposition durchgeführt.

Für die¼m letzten Merkmal des Kennzeichens des Anspruchs 1 angegebene Auswertung werden vorzugsweise als einzige relevante Kreiselparameter das Verhältnis der Torquer-Skalenfaktoren zweier Kreiselmeßachsen sowie die Kreiselachsen-Ausrichtfehler berücksichtigt.

Für das erfindungsgemäße Verfahren eignet sich in erster Linie ein im Prinzip bekannter, räumlich kleiner dynamisch abgestimmter Strapdown-Kreisel.

Das erfindungsgemäße Verfahren zeichnet sich vor allem durch folgende Vorteile aus:

1. Niedrige Kosten: Für das Kreiselsystem können bezüglich vieler Kreiselparameter mäßig genaue Instrumente verwendet werden, da die Meßmethode unempfindlich ist gegenüber Kreiselfehlern, z. B. Nullpunktswiederholbarkeit etc. Die Elektronik ist vergleichsweise einfach, da weitgehend Standard-Bausteine verwendet werden können, die einen hohen Grad an Miniaturisierung ermöglichen.

2. Es kann ein Kreisel geringer Größe verwendet werden, so daß sich die Erfindung zur Orientierung anderer Meßgeräte eignet, beispielsweise als integriertes Verbundelement auf dem Peilfernrohr von Theodoliten oder direkt auf anderen Peilgeräten wie z.B. Radar-suchantennen, Laser-Entfernungsmeßgeräten, Tiefbohr-geräten usw.

3. Die Genauigkeit des Meßverfahrens und die Schnelligkeit sowie die geringe Störanfälligkeit sind überraschend gut. Die digitale Auslegung des Systems ermöglicht den Einsatz digitaler Signal-Verarbeitungs- und Auswerttechniken, die eine sehr effektive  Kompensation von Störeinflüssen durch digitale Filter gestatten. Das System wird damit unabhängiger von Umwelteinflüssen, insbesondere von Vibrationen. Als Folge ergibt sich der Vorteil sehr kurzer Integrationsperioden für eine vorgegebene Genauigkeit.

4. Gute Bedienbarkeit: Der Einsatz eines Mikrocomputers ist möglich. Die Inbetriebnahme des Systems wird damit sehr einfach, da das Gesamtgerät dann lediglich eingeschaltet zu werden braucht. Alles weitere erfolgt automatisch und rechnergesteuert. An einer Anzeige- und Bedientafel können dann verschiedene Betriebsarten vorgewählt und Anfragen, Zwischenergebnisse usw. beispielsweise auf einer LED-Anzeige angezeigt werden.

Bei einer vorteilhaften und erprobten Ausführungsform wurde das erfindungsgemäße Verfahren zur Azimut-Bestimmung bei Theodoliten angewendet und zwar so, daß ein Kreisel mit zwei horizontal ausgerichteten Meßachsen und einer vertikal stehenden Spinachse direkt auf das Fernrohr eines Theodoliten montiert wurde. Der Azimut-Winkel, also der Winkel gegen geographisch Nord der Peilrichtung des Theodoliten konnte dann in sehr kurzer Zeit, d.h. innerhalb weniger Minuten bestimmt werden.

Die Erfindung und vorteilhafte Einzelheiten werden nachfolgend unter Bezug auf die Zeichnung und anhand

- 5 -

einiger Photographien in beispielsweiser Ausführungsform
näher erläutert. Es zeigen:

Fig. 1    ein System-Blockschaltbild zur Erläuterung
der elektronischen Verarbeitung der ermittelten
Meßergebnisse;

Fig. 2    ein Prinzipbeispiel für einen räumlich kleinen
dynamisch abgestimmten Straphdown-Kreisel, der
sich besonders gut für das erfindungsgemäße
Verfahren eignet;

Fig. 3    den Aufbau eines Meßsystems mit einem Theodoliten, dessen Peil-Grundlinie automatisch mit
Hilfe des erfindungsgemäßen Verfahrens ermittelt wird und

Fig. 4    eine vergrößerte Teilbilddarstellung des
Theodoliten aus Fig. 3 bei abgenommener oberer
Kreiselabdeckung.

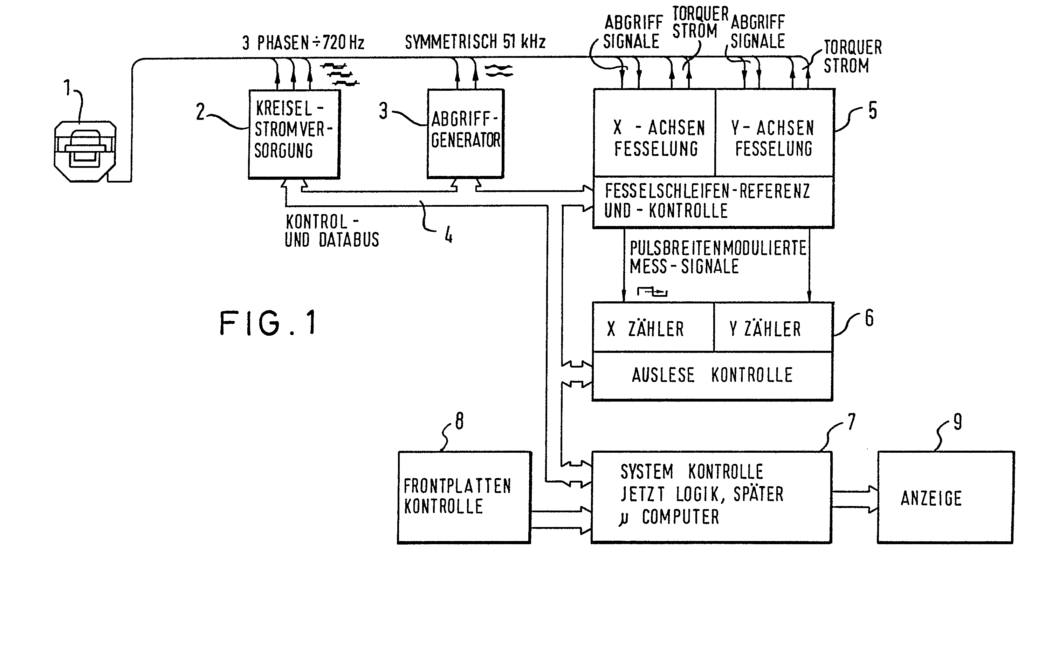

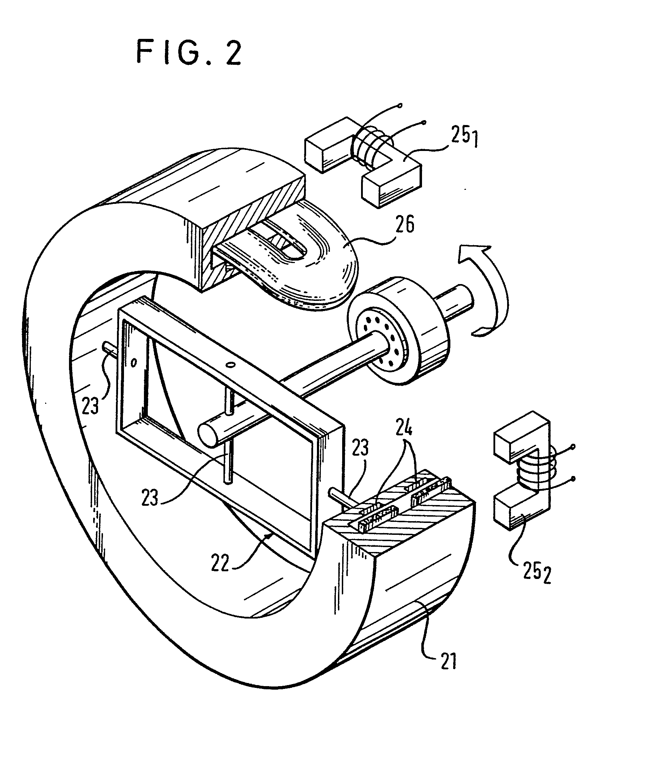

In Fig. 1 ist ein Strapdown-Kreisel mit Kreiselträger
und Vorverstärker mit Bezugshinweis 1 angegeben, der von
einer dreiphasigen Stromversorgung 2 (z.B. 720 Hz) gespeist
wird. Der Kreiselträger ist als eine um 180° um die Vertikalachse drehbare Plattform ausgebildet; die Drehung erfolgt
z.B. durch zwei fernsteuerbare Stellmotoren (nicht gezeigt).
Ein mit kreiselgehäusefesten Abgriffspulen $25_1$, $25_2$ (siehe
Fig. 2) gekoppelter Abgriffgenerator speist die Abgriffspulen mit einer Signalfrequenz von 51 kHz. Die kreiselgehäusefesten Torquerspulen    des Strapdown-Kreisels werden, unterteilt für einen X- bzw. Y-Kanal, mit den Torquer-
strömen $I_x$, $I_y$ gespeist. Die Baugruppe 5 erhält die Abgriffsignale, demoduliert sie phasenempfindlich und führt die
Quantisierung in binäre, pulsbreitenmodulierte Torquerströme
und ebensolche Auslesesignale durch; sie legt gleichzeitig
die Fesselschleifen-Referenz fest. Die weitere Verarbeitung

- 6 -

der pulsbreitenmodulierten Meßsignale erfolgt getrennt für den X- bzw. Y-Kanal in einer Baugruppe 6, die gleichzeitig die Auslesewerte überwacht. Die Gesamtanordnung wird von einer Systemkontrolle 7 aus gesteuert, die beispielsweise als Mikrocomputer verwirklicht sein kann; ihre Aufgabe ist es, die als Spannungspulsfolge vorliegenden Meßsignale mit Hilfe der gespeicherten Skalenfaktoren $S_x$, $S_y$ des Kreisels in Winkelwerte umzurechnen. Unter Torquer-Skalenfaktoren sind Umrechnungsfaktoren zur Umrechnung von Digital-Meßdaten in Winkelbeträge zu verstehen.

Vorgabewerte lassen sich an einer Frontplattenkontrolle 8 einstellen und eine Anzeige ist mit Bezugshinweis 9 gekennzeichnet. Der Datenaustausch zwischen den einzelnen Baugruppen erfolgt über einen Kontroll- und Datenbus 4, beispielsweise für die Ansteuerung der Stellmotoren des Drehtellers, der Teil der Kreiselträgers ist.

Die schematische Darstellung eines dynamisch abgestimmten Strapdown-Kreisels mit zwei Meßachsen nach Fig. 2 läßt einen Kreiselrotor 21, einen in dessen Innerem über zwei Torsions-Federhalbachsen 23 in bekannter Weise aufgehängten Kardanring 22, Radialpermanentmagnete 24, Torquerspulen 26 sowie die bereits erwähnten Abgriffspulen $25_1$, $25_2$ erkennen.

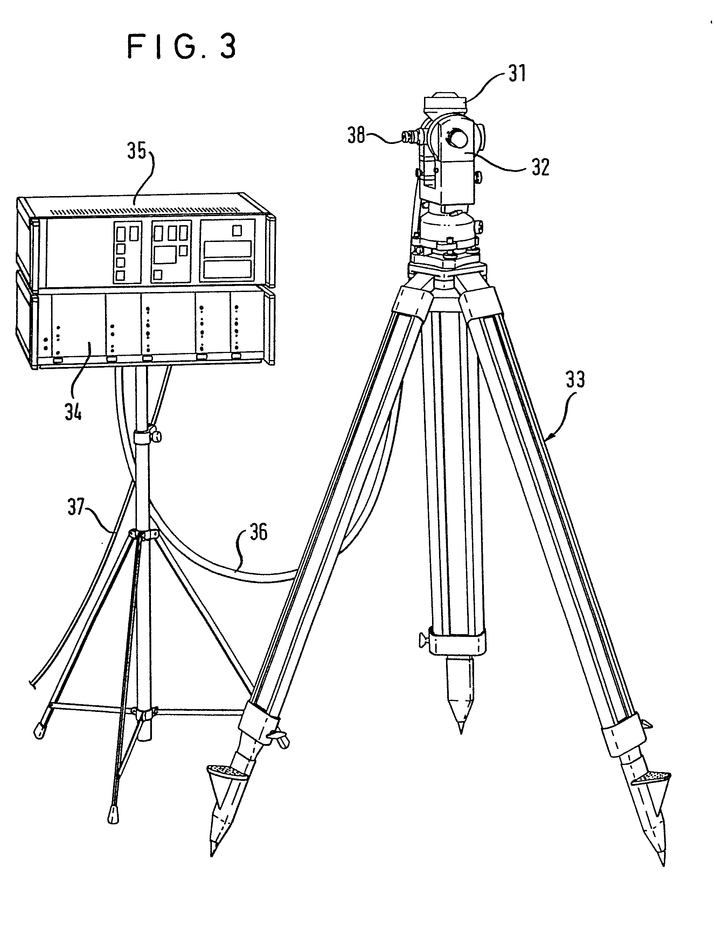

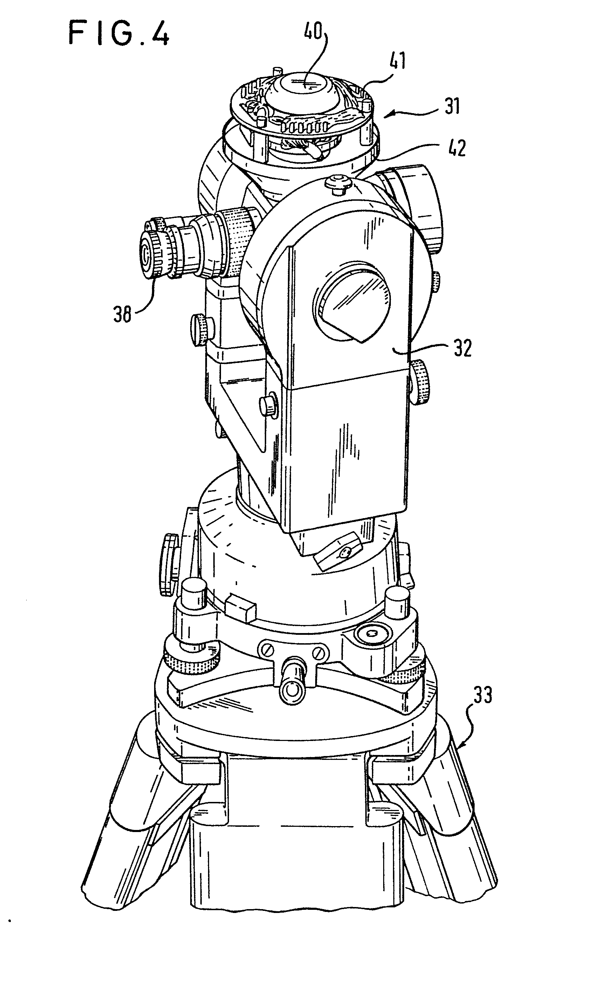

Zur Erläuterung einer vorteilhaften Anwendungsform der Erfindung wird auf die Fig. 3 und 4 Bezug genommen.

Diese Figuren zeigen einen auf einem Stativ 33 angeordneten Theodoliten 32, auf dessen Fernrohr 38 oberseitig ein Kreiselsystem 31 montiert ist, das über ein Versorgungs- und Signalverbindungskabel 36 mit einer elektronischen Versorgungs- und Auswerteeinheit mit Netzteil 34 und

- 7 -

Elektronik-Einheit 35 verbunden ist. Mit Bezugshinweis
37 ist ein Netzkabel bezeichnet.

Die Fig. 4 zeigt den Strapdown-Kreisel 31 bei abgenommener oberer Abdeckung. Die Figur läßt den gekapselten dynamisch abgestimmten Strapdown-Kreisel 40, einen
Vorverstärker 41 sowie einen Adapter 42 erkennen.

Das in Fig. 3 dargestellte Netzteil 34 mit Elektronik-Einheit    35 ist ersichtlicherweise noch ein Labormuster in räumlich relativ großer Ausführungsform. In einer
verbesserten Ausführungsform ist vorgesehen, die Einheiten
34, 35 durch die Verwendung von integrierten Elektronik-
Bausteinen und eines Mikrocomputers in einem räumlich
wesentlich kleineren Gehäuse zusammen unterzubringen.

Im folgenden werden einige mathematische Überlegungen zur weiteren Erläuterung des erfindungsgemäßen Meßprinzips gegeben:

Der gesuchte Azimut-Winkel läßt sich allgemein
darstellen zu:

$$\psi = ARCTAN \ \frac{\Omega_y + B_y}{\Omega_x + B_x} \qquad \dots\dots (1).$$

In Gleichung (1) sind mit

$\Omega_x = S_x I_x$ das Produkt des Torquer-Skalenfaktors $S_x$
und des Torquerstroms $I_x$ für den X-Kanal,

$\Omega_y = S_x I_y$ das Produkt aus dem Torquer-Skalenfaktor
$S_y$ und dem Torquerstrom $I_y$ für den Y-Kanal   und

- 8 -

mit

$B_x$, $B_y$ die Nullpunktsfehler des X-Meßkanals bzw.
Y-Meßkanals

bezeichnet.

Mit der erfindungsgemäßen 2-Positionsmessung kann der
Effekt des Nullpunktfehlers auf das Meßergebnis eliminiert
werden, wenn das Meßsystem bei der zweiten Messung (Position
(2)) um genau 180° gegenüber der ersten Messung um die Spinachse gedreht wird (Position(1)):

Der Azimut-Winkel aus einer solchen 2-Positionsmessung
ergibt sich zu

$$\gamma = \text{ARCTAN} \, \frac{\underbrace{(\Omega_y^{(1)} + B_y) - (\Omega_y^{(2)} + B_y)}_{\text{Messung (1)}} \quad \underbrace{}_{\text{Messung (2)}}}{(\Omega_x^{(1)} + B_x) - (\Omega_x^{(2)} + B_x)} = \text{ARCTAN} \, \frac{\Omega_y^{(1)} - \Omega_y^{(2)}}{\Omega_x^{(1)} - \Omega_x^{(2)}}$$

$$\gamma = \text{ARCTAN} \, \frac{\Omega_y^{(1)}}{\Omega_x^{(1)}} \qquad \qquad \ldots \ldots \quad (2)$$

Für eine einwandfreie Bestimmung des Azimut-Winkels $\gamma$
unmittelbar nach Erreichen des Synchronlaufs des Kreiselmotors (z.B. maximal 30 Sekunden) müssen außerdem noch
die Achsenausrichtfehler sowie der Effekt der zeitlichen
Veränderung der Kreiselfehler berücksichtigt werden. Der
Achsenausrichtfehler läßt sich in drei Anteile aufspalten,
nämlich

- Ausrichtfehler der Kreiselmeßachsen X und Y
  bezüglich der Meßebene (horizontale Drehebene des
  Meßsystems,

- Nichtorthogonalität der Achsen X und Y relativ
  zueinander, und

- Ausrichtfehler der Drehebene des Meßsystems gegenüber der lokalen Horizontebene (Horizontierungsfehler).

Bei der zeitlichen Variation der Kreiselfehler ist vor allem deren Temperaturempfindlichkeit zu berücksichtigen. Kurz nach dem Anlauf eines Kreisels ändert sich die Kreiseltemperatur sehr stark. Besonders kritisch ist für die Azimut-Bestimmung die Temperaturabhängigkeit des Nullpunktfehlers. Weniger kritisch sind die Temperaturempfindlichkeit der Skalenfaktoren, da stets nur das Skalenfaktorverhältnis $S_y/S_x$ auftritt und die Temperaturabhängigkeiten der beiden Skalenfaktoren $S_x$ und $S_y$ annähernd gleich sind.

Es läßt sich, ausgehend von der obigen Gleichung (2) zeigen, daß mit dem erfindungsgemäßen Verfahren eine weitgehende Temperaturkompensation erreicht werden kann. Dabei wird wie oben angegeben, von einer experimentellen und mathematisch ermittelten zeitlich exponentiellen Änderung der signifikanten Kreisfehler ausgegangen und es wird eine gewichtete Mittelung der Messungen in den Ausgangspositionen (1) und (3) vorgenommen. Wie sich zeigen läßt, ist dieser Mittelwert dann in bezug auf den Meßwert in um 180° um die Spinachse gedrehter Meßposition (Position (2)) temperaturkompensiert.

Im folgenden werden die einzelnen Baugruppen der Anordnung nach Fig. 1 noch etwas genauer anhand des erprobten Ausführungsbeispiels der Erfindung erläutert.

- Der Kreisel 1 (mit Kreiselträger und Vorverstärker; siehe Fig. 4) kann ein zweiachsiger, dynamisch abgestimmter trockener Strapdown-Kreisel vergleichsweise geringer Qualität bezüglich vieler Kreisel-

- 10 -

parameter sein, da die einzigen relevanten
Kreiselparameter, nämlich das Skalenfaktorverhältnis $S_y/S_x$ der beiden Kreiselmeßachsen und die
Achsenausrichtfehler der beiden Kreiselmeßachsen
wie oben angegeben zu berücksichtigen sind.

- Der Kreiselträger (Kreiselhalter) kann eine einfache, z.B. für die Montage auf dem Fernrohr eines
Theodoliten geeignete Aufnahmevorrichtung sein,
derart, daß die Kreisel-Drehachse (die Spinachse) vertikal steht. Im Kreiselhalter ist auch der Kreisel-
Vorverstärker untergebracht, der in prinzipiell
bekannter Weise ein Differenz-Verstärker für die X-
bzw. Y-Abgriffsignale sein kann.

- Die Kreisel-Stromversorgung 2 ist dreiphasig ausgelegt mit variabler Frequenz zur Einstellung der
Abstimmdrehzahl (z.B. 180 U/sec. $\pm$ 15 %).

- Der Abgriffgenerator 3 liefert die Erregerspannungsversorgung für die Primärwicklungen der induktiven
Abgriffe $25_1$, $25_2$. Die Erregerfrequenz beträgt z.B.
51 kHz. Die Abgriffspulen $25_1$, $25_2$ arbeiten nach
dem Prinzip eines Transformators mit variabler
Induktivität durch einen veränderlichen Luftspalt.

- Durch die sogenannte"Fesselelektronik" 5 werden
die analogen Meßsignale phasenempfindlich demoduliert, gefiltert und digitalisiert. Am Ausgang ergibt sich ein pulsbreitenmoduliertes Signal, das
pro Kanal einen H-Schalter steuert, so daß ein pulsbreitenmodulierter Rückstellstrom in die Torquerspulen gelangt.

- Die Frontplattenkontrolle 8 (Frontplatten-Interface)
synchronisiert und schaltet die Steuerung zwischen
der Frontplatte und der Systemkontrolle 7 (Mikrocomputer). Die Kreisel-Datensteuerung bewirkt die

- 11 -

Einlesung der digitalen Kreiselsignale in die als
X-Zähler bzw. Y-Zähler angegebenen Auf/Abzähler,
wobei ein jeweiliger Signalimpuls einem bestimmten
Winkelinkrement entspricht. In diesen Auf/Abzählern
erfolgt die Integration der digitalen Kreiselsignale
über eine durch die Kreisel-Datensteuerung definierte Periode bevor die Speicherung und Anzeige auf
der Anzeigeeinheit 9 erfolgt, die beispielsweise ein
LED-Anzeigepaneel sein kann.

- Die als Mikrocomputer ausgeführte Systemkontrolle
ermöglicht den automatischen Betrieb durch Steuerung
der Meßabfolge bis zur automatischen servogesteuerten Drehung des Kreisels in die drei Meßpositionen.

- 12 -

PATENTANSPRÜCHE

1.    Verfahren zur raschen und direkten Azimut-Winkelbestimmung mit Hilfe eines Kreiselkompasses,
g e k e n n z e i c h n e t   d u r c h   folgende Verfahrensschritte:

- Bei einer ersten Messung wird der Azimut-Winkel $\Psi$
  zwischen der im wesentlichen horizontalen Kreiselmeßachse (x) und Nord in einer Ausgangsposition
  bestimmt,
- bei einer zweiten Messung in einer um 180° um die
  vertikale Kreiseldrehachse (Spinachse) gedrehten
  Position wird der Azimut-Winkel ($\Psi$ + 180°) zwischen
  der Kreiselmeßachse (x) und Nord bestimmt;
- bei einer dritten Messung erfolgt die Azimut-
  Winkelbestimmung in der Ausgangsposition entsprechend
  der ersten Messung,
- unter der Annahme und Vorgabe eines zeitlich exponentiellen Verlaufs der Meßsignale infolge von
  Fehlereinflüssen wird in einer Signalaufnahme-
  und Verarbeitungseinheit ein gewichtetes Mittel
  zwischen den Meßwerten der ersten und dritten Messung
  derart gebildet, daß der Mittelwert bezüglich der im
  Meßsignal enthaltenen Fehlerbeiträge weitgehend
  dem Wert im Zeitraum der zweiten Messung entspricht.

2.    Verfahren nach Anspruch 1,
d a d u r c h   g e k e n n z e i c h n e t ,   daß die
drei Messungen jeweils während eines Zeitraums von 30 Sekunden durchgeführt werden.

- 13 -

3.   Verfahren nach Anspruch 1,
d a d u r c h   g e k e n n z e i c h n e t ,   daß die
Drehung um 180° um die vertikal stehende Kreiseldrehachse
zur Durchführung der zweiten Messung rechnergesteuert und
voll automatisch erfolgt.

4.   Verfahren nach einem der vorstehenden Ansprüche,
d a d u r c h   g e k e n n z e i c h n e t ,   daß die
Signalverarbeitungseinheit digital implementiert ist
und digitale Filter zur Eliminierung von Störeinflüssen
insbesondere von Vibrationseinflüssen auf das Meßsignal
enthält.

5.   Verfahren nach einem der vorstehenden Ansprüche,
d a d u r c h   g e k e n n z e i c h n e t ,   daß ein
dynamisch abgestimmter zweiachsiger Strapdown-Kreisel verwendet wird, und daß bei der im Anschluß an die 3-Positions-Messung erfolgenden Auswerting als relevante Kreiselparameter das Verhältnis der Torquer-Skalenfaktoren
($S_x$, $S_y$) der zwei Kreiselmeßachsen (X, Y) sowie die
Kreiselachsen-Ausrichtfehler berücksichtigt werden.

6.   Verfahren nach einem der vorstehenden Ansprüche,
d a d u r c h   g e k e n n z e i c h n e t ,   daß dieses
zur Positionsbestimmung und Ausrichtung eines Vermessungsgerätes angewendet wird.

7.   Anwendung des Verfahrens nach wenigstens einem der
vorstehenden Ansprüche zur Positionierung und Ausrichtung
eines Peilgeräts, insbesondere eines Theodoliten,
d a d u r c h   g e k e n n z e i c h n e t ,   daß das
Kreiselsystem (31) unmittelbar auf dem Peilgerät
montiert ist.

0077491

- 14 -

8.   Verfahrensanwendung nach Anspruch 7,
d a d u r c h   g e k e n n z e i c h n e t ,   daß das
Kreiselsystem (3q) unmittelbar auf dem Fernrohr (38) eines
Theodoliten (32) montiert ist.

FIG. 1

**3 PHASEN ÷ 720 Hz**  **SYMMETRISCH 51 kHz**  ABGRIFF SIGNALE  TORQUER STROM  ABGRIFF SIGNALE  TORQUER STROM

1

2 — KREISEL - STROMVERSORGUNG

3 — ABGRIFF - GENERATOR

X - ACHSEN FESSELUNG | Y - ACHSEN FESSELUNG — 5

FESSELSCHLEIFEN - REFERENZ UND - KONTROLLE

KONTROL - UND DATABUS

4

PULSBREITENMODULIERTE MESS - SIGNALE

X ZÄHLER | Y ZÄHLER — 6

AUSLESE KONTROLLE

8 — FRONTPLATTEN KONTROLLE

7 — SYSTEM KONTROLLE JETZT LOGIK, SPÄTER µ COMPUTER

9 — ANZEIGE

1/4

0077491

# FIG. 2

# FIG. 3

FIG.4

0077491

Nummer der Anmeldung

EP 82 10 9215

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 01 C 19/38 |
| A | DE-B-2 903 282 (BODENSEEWERK GERÄTETECHNIK)<br>* Spalte 1, Zeile 1 - Spalte 2, Zeile 14 * | 1,3,4 | |
| | --- | | |
| A | US-A-3 748 912 (GENERAL ELECTRIC)<br>* Spalte 9, Zeile 63 - Spalte 10, Zeile 24 * | 5 | |
| | ----- | | |

RECHERCHIERTE SACHGEBIETE (Int. Cl. ³)

G 01 C 19/38
G 01 C 19/34
G 01 C 25/00

Der vorliegende Recherchenbericht wurde für alle Patentansprüche erstellt.

| Recherchenort | Abschlußdatum der Recherche | Prüfer |
|---|---|---|
| DEN HAAG | 26-01-1983 | DE BUYZER H.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82